# EUROPEAN PATENT APPLICATION

(11) **EP 4 652 905 A1**
(43) Date of publication of application: **26.11.2025**
(21) Application number: 25177707.4
(22) Date of filing: 20.05.2025
(51) Int. Cl.: A47J 37/06

(54) **AIR FRYER WITH HIGH COOKING EFFICIENCY**

(30) Priority: 23.05.2024 CN 202410641668; 23.07.2024 CN 202421752351 U
(71) Applicant: Ningbo Careline Electric Appliance Co., Ltd., Ningbo, Zhejiang 315000 (CN)
(72) Inventor: ZHANG, Yichi, Ningbo, Zhejiang (CN); CUI, Jianqiang, Ningbo, Zhejiang (CN); HUO, Zhian, Ningbo, Zhejiang (CN)
(74) Representative: Meyer-Dulheuer MD Legal Patentanwälte PartG mbB

(57) **Abstract**

The present application relates to an air fryer with high cooking efficiency, the air fryer comprises a body and a cooking chamber disposed within the body, a wind-guide plate is provided at the rear of the cooking chamber, a flow-guide plate is disposed in front of the wind-guide plate, a flow channel is formed between the flow-guide plate and the wind-guide plate, a centrifugal fan is arranged within the flow channel, the flow channel comprises a left flow channel and a right flow channel that extend to both sides and connect with the cooking chamber, the left flow channel and the right flow channel are symmetric about the central axis, the left flow channel comprises an upper left flow channel and a lower left flow channel located below the upper left flow channel, the width of the upper left flow channel is smaller than or larger than that of the lower left flow channel, the flow-guide plate is provided with a suction port at its center, the suction port corresponds to the centrifugal fan, and a heating assembly is disposed within the cooking chamber and/or the flow channel. This application can effectively improve the air outlet efficiency and heat flow circulation efficiency, thereby enhancing the cooking efficiency and cooking performance of the air fryer.

## Description

### CROSS REFERENCE TO RELATED APPLICATIONS

The present disclosure claims priorities to Chinese patent application No. 2024106416688 filed to the China Patent Office on May 23, 2024 and entitled "AIR FRYER WITH HIGH COOKING EFFICIENCY"; Chinese patent application No. 2024217523513 filed to the China Patent Office on July 23, 2024 and entitled "HIGH - SAFETY VISIBLE AIR FRYER", the entire contents of which incorporated herein by reference.

### TECHNICAL FIELD

The present disclosure relates to the technical field of kitchen household appliances and cooking appliances, in particular to an air fryer with high cooking efficiency.

### BACKGROUND

With the development of society and the improvement of people's living standards, the usage rate of air fryers is increasing. Most existing air fryers are equipped with a heat-circulation fan at the top of the cooking chamber. During food cooking, this configuration tends to cause uneven heating of the food's upper and lower surfaces, necessitating flipping operations. As a result, the cooking efficiency and effect are poor, leading to a sub-par user experience. To meet user demands, a new type of air fryer with a side-mounted heat-circulation fan has emerged in the market. Although this design enables lateral air blowing and simultaneous heating of the food's upper and lower surfaces, most of these air fryers still employ centrifugal fans. The airflow generated during operation is spiral, which not only causes turbulence but also results in uneven vertical heat distribution. Consequently, the cooking efficiency and effect remain unsatisfactory, and the user experience is still less than ideal.

### SUMMARY

In order to solve the above at least one technical problem, the present invention discloses the following technical solutions:
An air fryer with high cooking efficiency, comprising a body and a cooking chamber disposed within the body, wherein the cooking chamber has a wind-guide plate at its rear, a flow-guide plate is disposed in front of the wind-guide plate, a flow channel is formed between the flow-guide plate and the wind-guide plate, a centrifugal fan is arranged within the flow channel, the flow channel comprises a left flow channel and a right flow channel that extend to both sides and connect with the cooking chamber, the left flow channel and the right flow channel are symmetric about the central axis, the left flow channel comprises an upper left flow channel and a lower left flow channel located below the upper left flow channel, the width of the upper left flow channel is smaller than or larger than that of the lower left flow channel, the flow-guide plate is provided with a suction port at its center, the suction port corresponds to the centrifugal fan, and a heating assembly is disposed within the cooking chamber and/or the flow channel.

In one or more embodiments, the flow channel further comprises an installation cavity formed by the inward recess of the wind-guide plate away from the flow-guide plate, the bottom of the installation cavity is a planar structure, and the centrifugal fan is disposed within the installation cavity, the left flow channel and the right flow channel are in communication with the installation cavity.

In one or more embodiments, the side walls of the installation cavity are configured as a flared structure extending from the bottom of the installation cavity towards the opening of the installation cavity, the left and right side walls of the installation cavity form the left flow channel and the right flow channel respectively.

In one or more embodiments, the centrifugal fan rotates in a counterclockwise direction, the width of the upper left flow channel is greater than that of the lower left flow channel, the width of the left flow channel gradually increases from top to bottom, then remains constant to form the upper left flow channel, and finally gradually decreases to form the lower left flow channel; or

The centrifugal fan rotates in a clockwise direction, the width of the upper left flow channel is smaller than that of the lower left flow channel, the width of the left flow channel gradually increases from bottom to top, then remains constant to form the lower left flow channel, and finally gradually decreases to form the upper left flow channel.

In one or more embodiments, the centrifugal fan has a rotation direction with a first tangent, the first tangent passes through the junction of the upper left flow channel and the lower left flow channel and intersects with the left edge of the wind-guide plate.

In one or more embodiments, the horizontal cross-section of the left flow channel and the right flow channel is arc-shaped, extending from the bottom of the installation cavity towards the opening of the installation cavity.

In one or more embodiments, the vertical cross-sectional shape of the installation cavity side wall is identical to that of the flow-guide plate, and at least a portion of the cross-sectional dimensions of the installation cavity side wall is larger than that of the flow-guide plate.

In one or more embodiments, the flow-guide plate is positioned on the same vertical plane as the opening of the installation cavity or in front of the vertical plane of the installation cavity opening.

In one or more embodiments, the centrifugal fan is located within the projection area of the flow-guide plate on the bottom of the installation cavity, and the suction port corresponds to the inlet at the center of the centrifugal fan.

In one or more embodiments, the cooking chamber has a top opening at its top, which is sealed by a viewport assembly, the viewport assembly comprises a first perspective plate disposed on the top of the cooking chamber to seal the top opening, a third perspective plate disposed on the upper surface of the body, and a second perspective plate disposed between the first perspective plate and the third perspective plate, the first perspective plate and the second perspective plate form a first heat-insulation cavity between them, and the second perspective plate and the third perspective plate form a second heat-insulation cavity between them.

In one or more embodiments, the top of the cooking chamber is provided with a air-guide plate, which has the top opening, above the air-guide plate is an upper machine core, which has a through-hole corresponding to the top opening, the second perspective plate is disposed on the upper machine core and seals the through-hole, an annular partition is provided between the top opening and the through-hole, the first perspective plate and the second perspective plate are respectively sandwiched between the air-guide plate, the upper machine core, and the annular partition.

In one or more embodiments, the periphery of the first perspective plate is fitted with a sealing sleeve, the first perspective plate is adapted to be sealed against the annular partition and the air-guide plate via the sealing sleeve.

In one or more embodiments, a third heat-insulation cavity is formed between the air-guide plate, the upper machine core, and the annular partition, and the third heat-insulation cavity contains an insulating layer, the body houses a heat-dissipation flow channel connected to the atmosphere, the heat-dissipation flow channel contains a heat-dissipation component for generating a cooling airflow, the heat-dissipation flow channel is arranged to surround at least a portion of the third heat-insulation cavity.

In one or more embodiments, the body houses a heat-dissipation flow channel connected to the atmosphere, the heat-dissipation flow channel contains a heat-dissipation component for generating a cooling airflow, the heat-dissipation flow channel is connected to the second heat-insulation cavity, outside the second heat-insulation cavity is an installation cavity housing electrical components, a heat-insulation board separates the second heat-insulation cavity from the installation cavity, a fourth heat-insulation cavity is formed between the heat-insulation board and the outer wall of the installation cavity.

In one or more embodiments, the top of the body is provided with an installation groove surrounding the top opening, the third perspective plate is disposed within the installation groove, with its top surface flush with the top surface of the installation groove.

### BRIEF DESCRIPTION OF THE DRAWINGS

In order to describe technical solutions in specific implementations of the present disclosure or in the prior art more clearly, the accompanying drawings that need to be used in the description of the specific implementations or the prior art will be briefly introduced below. Apparently, the accompanying drawings in the following description are some implementations of the present disclosure, and for those of ordinary skill in the art, on the premise of no creative labor, other accompanying drawings may also be obtained from these accompanying drawings.
FIG. 1 is a schematic diagram of the internal cavity of the first embodiment of the present disclosure.
FIG. 2 is an exploded view of the internal cavity structure of the first embodiment of the present disclosure.
FIG. 3 is a schematic diagram of the internal cavity cross-section of the first embodiment of the present disclosure.
FIG. 4 is a schematic diagram of the airflow of the centrifugal fan in the first embodiment of the present disclosure.
FIG. 5 is a schematic diagram of the airflow of the flow channel in the first embodiment of the present disclosure.
FIG. 6 is a schematic diagram of the internal cavity heat flow circulation of the first embodiment of the present disclosure.
FIG. 7 is a schematic diagram of the internal cavity cross-section of the second embodiment of the present disclosure.
FIG. 8 is a schematic diagram of the airflow of the centrifugal fan in the second embodiment of the present disclosure.
FIG. 9 is a schematic diagram of the overall structure of the third embodiment of the present disclosure.
FIG. 10 is a schematic diagram of the local enlarged cross-section of the third embodiment of the present disclosure.
FIG. 11 is a schematic diagram of the partial structure decomposition of the third embodiment of the present disclosure.

Reference numerals:
10(10A) - body; 11(11A) - cooking chamber; 12(12A) - wind-guide plate;
13(13A) - flow-guide plate; 131(131A) - suction port; 14(14A) - flow channel;
141(141A) - left flow channel; 1411(1411A) - upper left flow channel;
1412(1412A) - lower left flow channel; 142(142A) - right flow channel;
1421(1421A) - upper right flow channel; 1422(1422A) - lower right flow channel;
143 - installation cavity; 15(15A) - centrifugal fan; 151 - first tangent;
152 - second tangent; 20(20A) - heating assembly;
30(30A) - drive system; 31(31A) - drive motor;
810 - body; 811 - cooking chamber; 8111 - top opening; 812 - air-guide plate;
813 - upper machine core; 8131 - through-hole; 814 - third heat-insulation cavity;
815 - heat-dissipation flow channel; 816 - installation cavity; 817 - heat-insulation plate;
818 - fourth heat-insulation cavity; 819 - installation groove;
820 - hot-air circulation system; 830 - viewport assembly; 831 - first perspective plate;
832 - second perspective plate; 833 - third perspective plate; 834 - first heat-insulation cavity;
835 - second heat-insulation cavity; 840 - sealing sleeve; 850 - annular partition.

### DETAILED DESCRIPTION

The present application provides a novel air fryer with high cooking efficiency, to solve the technical problems of slow cooking speed and poor user experience associated with existing air fryers.

In order to solve the above technical problems, an air fryer with high cooking efficiency is provided. the air fryer comprises a body and a cooking chamber disposed within the body, a wind-guide plate is provided at the rear of the cooking chamber, a flow-guide plate is disposed in front of the wind-guide plate, a flow channel is formed between the flow-guide plate and the wind-guide plate, a centrifugal fan is arranged within the flow channel, the flow channel comprises a left flow channel and a right flow channel that extend to both sides and connect with the cooking chamber, the left flow channel and the right flow channel are symmetric about the central axis, the left flow channel comprises an upper left flow channel and a lower left flow channel located below the upper left flow channel, the width of the upper left flow channel is smaller than or larger than that of the lower left flow channel, the flow-guide plate is provided with a suction port at its center, the suction port corresponds to the centrifugal fan, and a heating assembly is disposed within the cooking chamber and/or the flow channel. In the cooking chamber of the air fryer, the air is heated by the heating assembly, the centrifugal fan draws in the heated air from the suction port at the center of the flow-guide plate into the flow channel and blows it out from the sides of the flow-guide plate, thereby forming a horizontal circulating hot air flow within the cooking chamber, this allows for more effective heating of the upper and lower surfaces of the food in the cooking chamber, thereby improving the cooking effect. At the same time, since the airflow generated by the rotation of the centrifugal fan is spiral, the left flow channel is designed with an unequal upper and lower width structure. Specifically, the width of the upper left flow channel is set to be smaller than or larger than that of the lower left flow channel based on the operating conditions of the centrifugal fan, this design enables more of the horizontally flowing air to be expelled through the left flow channel to promote horizontal circulation of the circulating hot air flow, while reducing the vertical airflow expelled through the left flow channel to minimize turbulence within the cooking chamber. As a result, the exhaust efficiency and heat circulation efficiency are effectively improved. Furthermore, since the airflow exiting the left flow channel and the right flow channel is symmetric about the central axis of the centrifugal fan, the right flow channel is also designed with an unequal upper and lower width structure symmetric to the left flow channel, this further enhances the exhaust efficiency and heat circulation efficiency, thereby improving the cooking efficiency and cooking performance of the air fryer.

In an optional embodiment, the flow channel further comprises an installation cavity formed by the inward recess of the wind-guide plate away from the flow-guide plate, the bottom of the installation cavity is a planar structure, and the centrifugal fan is disposed within the installation cavity, both the left flow channel and the right flow channel are in communication with the installation cavity. By providing an installation cavity with a planar bottom on the wind-guide plate and installing the centrifugal fan within the installation cavity, the internal space of the flow channel is increased, this allows the side of the centrifugal fan to correspond relatively with the bottom plane, thereby facilitating better airflow circulation driven by the centrifugal fan. Consequently, the heat circulation efficiency and cooking efficiency within the air fryer are effectively improved.

**In** an optional embodiment, the side walls of the installation cavity are configured as a flared structure extending from the bottom of the installation cavity towards the opening of the installation cavity, the left and right side walls of the installation cavity serve to form the left flow channel and the right flow channel respectively. By configuring the side walls of the installation cavity as a flared structure extending from the bottom towards the opening, the hot airflow thrown off by the centrifugal fan can be better guided, this enables the hot airflow to turn and enter the cooking chamber more effectively, thereby heating the food within the cooking chamber and improving cooking efficiency. Additionally, the flared structure of the installation cavity side walls allows the hot airflow within the installation cavity to be more uniformly diffused into the cooking chamber, thereby heating the food and enhancing the cooking effect.

In an optional embodiment, the centrifugal fan rotates in a counterclockwise direction, the width of the upper left flow channel is greater than that of the lower left flow channel, the width of the left flow channel gradually increases from top to bottom, then remains constant to form the upper left flow channel, and finally gradually decreases to form the lower left flow channel. When the centrifugal fan rotates counterclockwise, the upper left flow channel becomes a high-pressure zone, while the lower left flow channel becomes a low-pressure zone, by setting the width of the upper left flow channel to be greater than that of the lower left flow channel, more of the horizontally flowing air can be expelled through the upper left flow channel to promote the horizontal circulation of the circulating hot air flow. Meanwhile, the vertical airflow expelled through the lower left flow channel is reduced, thereby minimizing turbulence within the cooking chamber and effectively improving the heat circulation efficiency and cooking efficiency within the cooking chamber.

In an optional embodiment, the centrifugal fan rotates in a clockwise direction, the width of the upper left flow channel is smaller than that of the lower left flow channel, the width of the left flow channel gradually increases from bottom to top, then remains constant to form the lower left flow channel, and finally gradually decreases to form the upper left flow channel. When the centrifugal fan rotates clockwise, the upper left flow channel becomes a low-pressure zone, while the lower left flow channel becomes a high-pressure zone, by setting the width of the upper left flow channel to be smaller than that of the lower left flow channel, more of the horizontally flowing air can be expelled through the lower left flow channel to promote the horizontal circulation of the circulating hot air flow. Meanwhile, the vertical airflow expelled through the upper left flow channel is reduced, thereby minimizing turbulence within the cooking chamber and effectively improving the heat circulation efficiency and cooking efficiency within the cooking chamber.

In an optional embodiment, the centrifugal fan has a rotation direction with a first tangent, the first tangent passes through the junction of the upper left flow channel and the lower left flow channel and intersects with the left edge of the wind-guide plate. **In** the air fryer, the airflow generated by the rotation of the centrifugal fan is spiral, meaning the wind is thrown off along the tangent direction of the fan blades, by setting the first tangent of the centrifugal fan's rotation direction to pass through the junction of the upper left flow channel and the lower left flow channel and intersect with the left edge of the wind-guide plate, the air on one side of the first tangent is primarily horizontally flowing air, while the air on the other side is primarily vertically flowing air. By utilizing the wider of the upper left flow channel and the lower left flow channel to guide the horizontally flowing air thrown off by the centrifugal fan, and the narrower one to guide the vertically flowing air, more of the horizontally flowing air can be directed into the cooking chamber to promote the horizontal circulation of the circulating hot air flow. At the same time, the vertically flowing air expelled into the cooking chamber is reduced, thereby minimizing turbulence and effectively improving the cooking efficiency of the air fryer.

In an optional embodiment, the centrifugal fan has a rotation direction with a first tangent, the first tangent passes through the junction of the upper left flow channel and the lower left flow channel and intersects with the left edge of the wind-guide plate. In the air fryer, the airflow generated by the rotation of the centrifugal fan is spiral, meaning the wind is thrown off along the tangent direction of the fan blades, by setting the first tangent of the centrifugal fan's rotation direction to pass through the junction of the upper left flow channel and the lower left flow channel and intersect with the left edge of the wind-guide plate, the air on one side of the first tangent is primarily horizontally flowing air, while the air on the other side is primarily vertically flowing air. By utilizing the wider of the upper left flow channel and the lower left flow channel to guide the horizontally flowing air thrown off by the centrifugal fan, and the narrower one to guide the vertically flowing air, more of the horizontally flowing air can be directed into the cooking chamber to promote the horizontal circulation of the circulating hot air flow. At the same time, the vertically flowing air expelled into the cooking chamber is reduced, thereby minimizing turbulence and effectively improving the cooking efficiency of the air fryer.

In an optional embodiment, the horizontal cross-section of the left flow channel and the right flow channel is arc-shaped, extending from the bottom of the installation cavity towards the opening of the installation cavity. By configuring the left flow channel and the right flow channel with an arc-shaped cross-section, the resistance encountered by the hot airflow flowing within the flow channel can be effectively reduced. This also enables better guidance of the hot airflow thrown off by the centrifugal fan, allowing it to turn and enter the cooking chamber more effectively to heat the food. Consequently, the heat circulation efficiency and cooking efficiency within the air fryer are improved.

In an optional embodiment, the vertical cross-sectional shape of the installation cavity side wall is identical to that of the flow-guide plate, and at least a portion of the cross-sectional dimensions of the installation cavity side wall is larger than that of the flow-guide plate. By configuring the shape of the flow-guide plate to match the vertical cross-sectional shape of the installation cavity side wall, the flow-guide plate can better cooperate with the wind-guide plate, thereby enhancing the overall aesthetics of the air fryer. This also reduces the mutual interference between the central suction and the surrounding exhaust airflow of the flow-guide plate, thereby improving the heat circulation efficiency within the air fryer. Additionally, by ensuring that at least a portion of the vertical cross-sectional dimensions of the installation cavity side wall is larger than that of the flow-guide plate, the outlet size of the flow channel can be guaranteed, preventing the flow-guide plate from obstructing the flow channel outlet and ensuring the smooth expulsion of the hot airflow within the flow channel. This, in turn, ensures the heat circulation efficiency and cooking efficiency of the air fryer.

In an optional embodiment, the flow-guide plate is located on the same vertical plane as the opening of the installation cavity, or the flow-guide plate is positioned in front of the vertical plane of the installation cavity opening. By positioning the flow-guide plate at the opening of the installation cavity or in front of the opening plane of the installation cavity, the centrifugal fan can more orderly draw in the hot air from the cooking chamber through the suction port at the center of the flow-guide plate. This ensures that the intake and exhaust processes do not interfere with each other, effectively reducing the occurrence of turbulence and enhancing the heat circulation efficiency and cooking efficiency of the air fryer.

In an optional embodiment, the centrifugal fan is located within the projection area of the flow-guide plate on the bottom of the installation cavity, and the suction port corresponds to the inlet at the center of the centrifugal fan. By positioning the centrifugal fan within the projection area of the flow-guide plate on the bottom of the installation cavity, the centrifugal fan can be hidden, thereby improving the overall aesthetics of the air fryer. This also reduces the mutual interference between the central suction and the surrounding exhaust airflow of the flow-guide plate, thereby enhancing the suction and exhaust efficiency, and consequently improving the heat circulation efficiency and cooking efficiency of the air fryer. Additionally, by aligning the suction port with the inlet at the center of the centrifugal fan, the suction efficiency is effectively improved, further boosting the heat circulation efficiency and cooking efficiency of the air fryer.

The present application provides a high-safety visible air fryer to address the technical problem of the lack of visibility and poor safety in existing air fryers. The air fryer comprises a body, a cooking chamber disposed within the body, and a hot-air circulation system connected to the cooking chamber, the top of the cooking chamber is provided with a top opening, which is sealed by a viewport assembly, the viewport assembly includes a first perspective plate disposed on the top of the cooking chamber to seal the top opening, a third perspective plate disposed on the upper surface of the body, and a second perspective plate disposed between the first perspective plate and the third perspective plate, the first perspective plate and the second perspective plate form a first heat-insulation cavity between them, while the second perspective plate and the third perspective plate form a second heat-insulation cavity between them. The air fryer enables users to visually monitor the cooking process within the cooking chamber, thereby enhancing the user's cooking experience and improving the cooking effect. Furthermore, by configuring the viewport assembly with a three-layer perspective plate structure and forming heat-insulation cavities between adjacent perspective plates, effective heat insulation is achieved. This reduces the risk of users being scalded by the high temperature within the cooking chamber, thereby improving the safety of the air fryer.

In an optional embodiment, the top of the cooking chamber is provided with a wind-guide plate, which has the top opening, above the wind-guide plate is an upper machine core, which has a through-hole corresponding to the top opening, the second perspective plate is disposed on the upper machine core and seals the through-hole, an annular partition is provided between the top opening and the through-hole, the first perspective plate and the second perspective plate are sandwiched between the wind-guide plate, the upper machine core, and the annular partition. The annular partition not only facilitates the installation and fixation of the first perspective plate and the second perspective plate but also separates them to form the first heat-insulation cavity, this effectively insulates the high temperature within the cooking chamber, reducing the risk of users being scalded by the escaping heat, thereby enhancing the safety of the air fryer.

In an optional embodiment, the periphery of the first perspective plate is fitted with a sealing sleeve made of elastic high-temperature-resistant material, the first perspective plate is adapted to be sealed against the annular partition and the wind-guide plate via the sealing sleeve, the sealing sleeve serves to ensure a tight seal between the first perspective plate, the annular partition, and the wind-guide plate. This effectively prevents the high-temperature hot air within the cooking chamber from leaking out and damaging external electrical components. It also reduces the risk of the body and/or the viewport assembly becoming excessively hot and causing scald injuries to users, thereby enhancing the performance stability and safety of the air fryer.

In an optional embodiment, a third heat-insulation cavity is formed between the wind-guide plate, the upper machine core, and the annular partition, and the third heat-insulation cavity contains an insulating layer. By incorporating the third heat-insulation cavity and filling it with an insulating layer between the wind-guide plate, the upper machine core, and the annular partition, effective heat insulation is provided around the viewport assembly. This reduces the risk of the body surface near the viewport assembly becoming excessively hot and causing scald injuries to users, thereby improving the safety of the air fryer.

In an optional embodiment, the body houses a heat-dissipation flow channel connected to the atmosphere, the heat-dissipation flow channel contains a heat-dissipation component for generating a cooling airflow, the heat-dissipation flow channel is arranged to surround at least a portion of the third heat-insulation cavity. By incorporating a heat-dissipation flow channel within the body and arranging it to surround part of the third heat-insulation cavity, the cooling airflow within the heat-dissipation flow channel can dissipate heat from the third heat-insulation cavity. This reduces the risk of the body surface becoming excessively hot due to the high temperature within the cooking chamber passing through the third heat-insulation cavity, thereby minimizing the risk of scald injuries to users and enhancing the safety of the air fryer.

In an optional embodiment, the body houses a heat-dissipation flow channel connected to the atmosphere, the heat-dissipation flow channel contains a heat-dissipation component for generating a cooling airflow, the heat-dissipation flow channel is connected to the second heat-insulation cavity. By incorporating a heat-dissipation flow channel within the body and connecting it to the second heat-insulation cavity, the cooling airflow within the heat-dissipation flow channel can dissipate heat from the second heat-insulation cavity. This reduces the risk of the viewport assembly surface becoming excessively hot due to the high temperature within the cooking chamber passing through the second heat-insulation cavity, thereby minimizing the risk of scald injuries to users and enhancing the safety of the air fryer. **In** an optional embodiment, outside the second heat-insulation cavity is an installation cavity housing electrical components, a heat-insulation board separates the second heat-insulation cavity from the installation cavity, a fourth heat-insulation cavity is formed between the heat-insulation board and the outer wall of the installation cavity. By incorporating the fourth heat-insulation cavity between the second heat-insulation cavity and the installation cavity, the transfer of high temperature from the cooking chamber to the installation cavity is reduced. This lowers the risk of damage to the electrical components within the installation cavity. It also prevents the cooling airflow within the second heat-insulation cavity, which may carry residual heat, from entering the installation cavity and causing overheating that could affect the normal operation of the electrical components. Consequently, the performance stability and safety of the air fryer are enhanced.

In an optional embodiment, the heat-insulation board is made of heat-insulating material, and the first perspective plate is made of high-temperature-resistant transparent material. The use of heat-insulating material for the heat-insulation board further enhances the insulating effect of the fourth heat-insulation cavity, effectively reducing the impact of heat transfer from the cooking chamber on the electrical components within the installation cavity and ensuring their normal operation. Meanwhile, the first perspective plate, made of high-temperature-resistant transparent material, avoids performance degradation caused by the high temperature within the cooking chamber, ensuring the stability and reliability of the first perspective plate's performance and structure.

In an optional embodiment, the top of the body is provided with an installation groove surrounding the top opening, the third perspective plate is disposed within the installation groove, with its top surface flush with the top surface of the installation groove. By positioning the third perspective plate within the installation groove and aligning its top surface with that of the installation groove, the third perspective plate is hidden, thereby enhancing the overall aesthetics of the air fryer.

Compared with the prior art, the present application has the beneficial effects:
in the present application, by incorporating a flow channel extending to both sides at the rear of the cooking chamber and housing a centrifugal fan within the flow channel, the hot air within the cooking chamber, heated by the heating assembly, is drawn into the flow channel through the suction port at the center of the flow-guide plate and expelled from the sides of the flow-guide plate, this creates a horizontally circulating hot air flow within the cooking chamber, enabling more effective heating of the upper and lower surfaces of the food and improving the cooking outcome. Additionally, since the airflow generated by the rotation of the centrifugal fan is spiral, the left flow channel is designed with an unequal upper and lower width structure. Specifically, the width of the upper left flow channel is set to be smaller than or larger than that of the lower left flow channel based on the operating conditions of the centrifugal fan, this design allows more horizontally flowing air to be expelled through the left flow channel to promote horizontal circulation of the circulating hot air flow, while reducing the vertical airflow expelled through the left flow channel to minimize turbulence within the cooking chamber. Consequently, the exhaust efficiency and heat circulation efficiency are improved. Furthermore, as the airflow exiting the left flow channel and the right flow channel is symmetric about the central axis of the centrifugal fan, the right flow channel is also designed with an unequal upper and lower width structure symmetric to the left flow channel, this further enhances the exhaust efficiency and heat circulation efficiency, thereby elevating the cooking efficiency and cooking performance of the air fryer.

In the present application, it also provides a high-safety visible air fryer, by incorporating a top opening in the cooking chamber and sealing it with a viewport assembly, the interior of the cooking chamber becomes visible, this allows users to intuitively observe the cooking status of the food, thereby improving the user's cooking experience and enabling better food cooking, which in turn enhances the cooking effect. Additionally, by configuring the viewport assembly with a three-layer perspective plate structure and forming heat-insulation cavities between adjacent perspective plates, effective heat insulation is achieved. This reduces the risk of users being scalded by the high temperature within the cooking chamber, thereby improving the safety of the air fryer.

To provide a clearer understanding of the present application, technical solutions, and advantages of this disclosure, the following detailed description is provided in conjunction with the specific embodiments and accompanying drawings of this disclosure, it should be understood that the specific embodiments described herein are merely illustrative of the disclosure and are not intended to limit it, in the description of this disclosure, it should be noted that the terms "first", "second", etc., are used solely for the purpose of distinguishing one component from another and do not imply any limitations on the quantity or sequence of the components, unless otherwise specified, the term "comprising" or "including" used in this disclosure indicates the presence of the stated components but does not exclude the presence or addition of other components.

Thus, the following detailed description of the embodiments of the present disclosure provided in the accompanying drawings is not intended to limit the scope of the present disclosure as claimed, but is merely representative of selected embodiments of the present disclosure. Based on the embodiments of the present disclosure, all other embodiments obtained by those of ordinary skill in the art without creative work shall fall within the protection scope of the present disclosure.

### Embodiment 1:

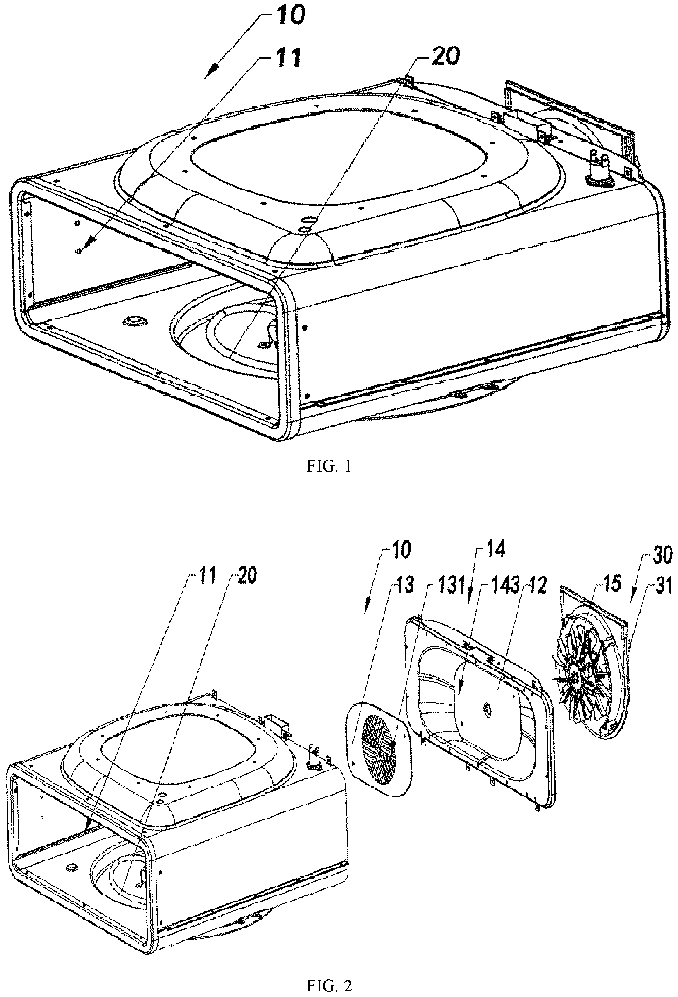

As shown in FIG. 1 to FIG. 6, the first embodiment of the air fryer provided in this disclosure comprises a body 10 and a cooking chamber 11 disposed within the body 10, the cooking chamber 11 is provided with a basket that is removably connected and communicates with the cooking chamber 11, the basket is adapted to hold food to be cooked, at the rear of the cooking chamber 11, there is a wind-guide plate 12, in front of the wind-guide plate 12, a flow-guide plate 13 is disposed, between the flow-guide plate 13 and the wind-guide plate 12, a flow channel 14 is formed, which extends to both sides of the cooking chamber 11 and connects with it. Within the flow channel 14, a centrifugal fan 15 is arranged to drive air circulation, the flow-guide plate 13 is provided with a suction port 131 at its center, which corresponds to the centrifugal fan 15, the cooking chamber 11 is equipped with a heating assembly 20. By incorporating a flow channel 14 extending to both sides at the rear of the cooking chamber 11 and housing a centrifugal fan 15 within the flow channel 14, the air fryer draws the heated air from the cooking chamber 11 into the flow channel 14 through the suction port 131 at the center of the flow-guide plate 13 and expels it from the sides of the flow-guide plate 13, this creates a horizontally circulating hot air flow within the cooking chamber 11, enabling more effective heating of the upper and lower surfaces of the food and improving the cooking outcome.

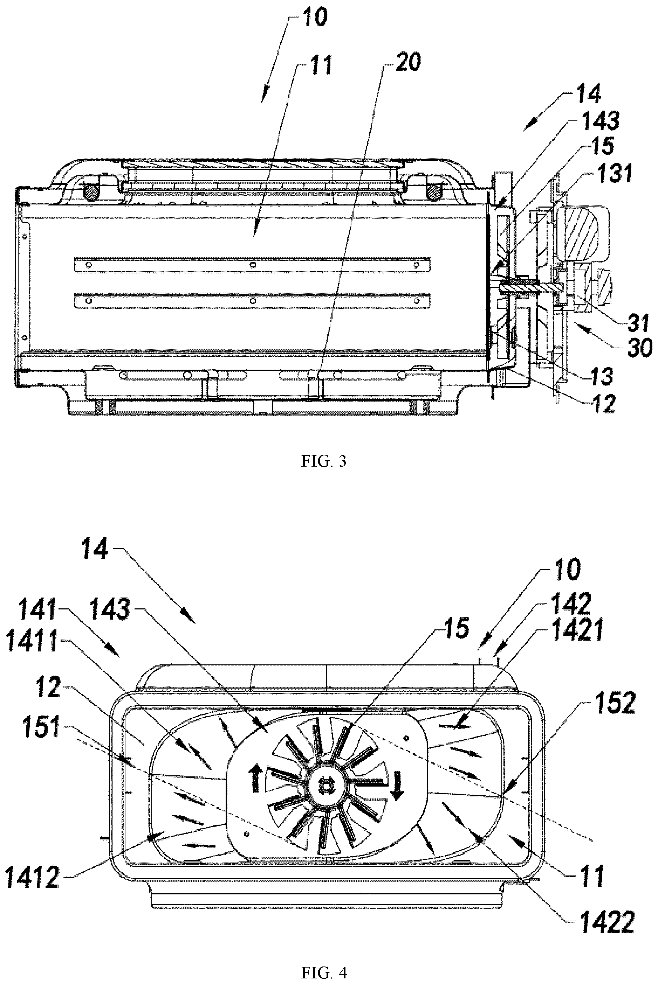

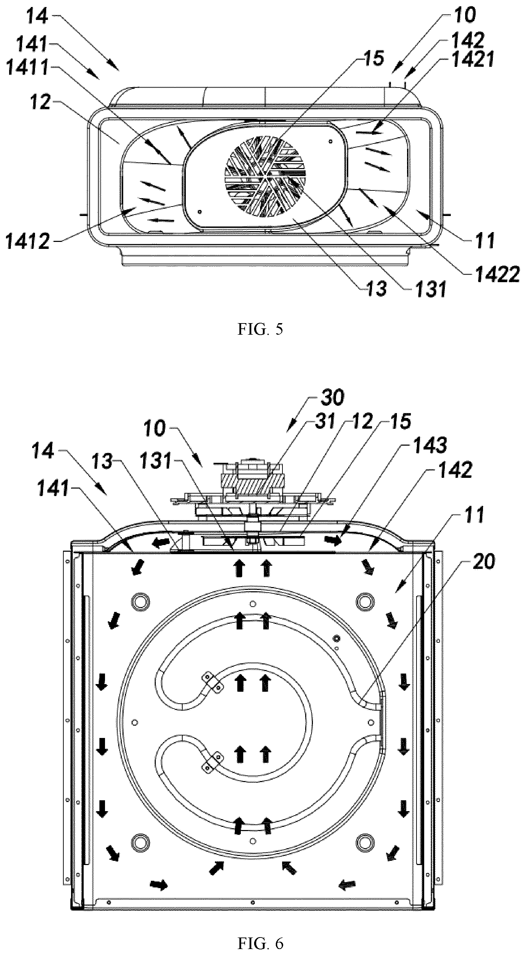

In the air fryer of this disclosure, the flow channel 14 includes a left flow channel 141 and a right flow channel 142 that extend to both sides and connect with the cooking chamber 11, the left flow channel 141 and the right flow channel 142 are symmetric about the central axis, the left flow channel 141 comprises an upper left flow channel 1411 and a lower left flow channel 1412 located below the upper left flow channel 1411, the width of the upper left flow channel 1411 may be smaller than or larger than that of the lower left flow channel 1412, the right flow channel 142 comprises an upper right flow channel 1421 and a lower right flow channel 1422 located below the upper right flow channel 1421. The width of the upper right flow channel 1421 may be smaller than or larger than that of the lower right flow channel 1422, the body 10 houses a drive system 30, which includes a drive motor 31 with variable rotation direction, the drive motor 31 is connected to the centrifugal fan 15 via an extended shaft and is adapted to drive the centrifugal fan 15 to rotate, thereby generating circulating hot air flow within the cooking chamber 11, since the airflow generated by the rotation of the centrifugal fan 15 is spiral, the left flow channel 141 is designed with an unequal upper and lower width structure. Specifically, the width of the upper left flow channel 1411 is set to be smaller than or larger than that of the lower left flow channel 1412 based on the operating conditions of the centrifugal fan 15, this design allows more horizontally flowing air to be expelled through the left flow channel 141 to promote horizontal circulation of the circulating hot air flow, while reducing the vertical airflow expelled through the left flow channel 141 to minimize turbulence within the cooking chamber 11. Consequently, the exhaust efficiency and heat circulation efficiency are improved, as the airflow exiting the left flow channel 141 and the right flow channel 142 is symmetric about the central axis of the centrifugal fan 15, the right flow channel 142 is also designed with an unequal upper and lower width structure symmetric to the left flow channel 141, this further enhances the exhaust efficiency and heat circulation efficiency, thereby improving the cooking efficiency and cooking performance of the air fryer. Specifically, as shown in FIG. 4 and FIG. 5, in an optional embodiment, when the centrifugal fan 15 rotates clockwise, the width of the upper left flow channel 1411 is set to be smaller than that of the lower left flow channel 1412, the width of the right upper flow channel 1421 is set to be larger than that of the right lower flow channel 1422, the width of the left flow channel 141 gradually increases from bottom to top, then remains constant to form the lower left flow channel 1412, and finally gradually decreases to form the upper left flow channel 1411. Meanwhile, the width of the right flow channel 142 gradually increases from top to bottom, then remains constant to form the upper right flow channel 1421, and finally gradually decreases to form the lower right flow channel 1422, when the centrifugal fan 15 rotates clockwise, the upper left flow channel 1411 becomes a low-pressure zone, the lower left flow channel 1412 becomes a high-pressure zone, the upper right flow channel 1421 becomes a high-pressure zone, and the lower right flow channel 1422 becomes a low-pressure zone. By setting the width of the upper left flow channel 1411 to be smaller than that of the lower left flow channel 1412 and the width of the upper right flow channel 1421 to be larger than that of the lower right flow channel 1422, more horizontally flowing air is expelled through the lower left flow channel 1412 and the upper right flow channel 1421 to promote the horizontal circulation of the circulating hot air flow. Meanwhile, the vertical airflow expelled through the upper left flow channel 1411 and the lower right flow channel 1422 is minimized to reduce turbulence within the cooking chamber 11, thereby enhancing the heat circulation efficiency and cooking efficiency within the cooking chamber 11.

As shown in FIG. 3 and FIG. 6, in an optional embodiment, the flow channel 14 further includes an installation cavity 143 formed by the inward recess of the wind-guide plate 12 away from the flow-guide plate 13. the bottom of the installation cavity 143 is a planar structure, and the centrifugal fan 15 is disposed within the installation cavity 143, both the left flow channel 141 and the right flow channel 142 are in communication with the installation cavity 143. By providing an installation cavity 143 with a planar bottom on the wind-guide plate 12 and installing the centrifugal fan 15 within the installation cavity 143, the internal space of the flow channel 14 is increased, this allows the side of the centrifugal fan 15 to correspond relatively with the bottom plane, thereby facilitating better airflow circulation driven by the centrifugal fan 15. Consequently, the heat circulation efficiency and cooking efficiency within the air fryer are effectively improved.

As shown in FIG. 3 and FIG. 6, in an optional embodiment, the side walls of the installation cavity 143 are configured as a flared structure extending from the bottom of the installation cavity 143 towards the opening of the installation cavity 143, the left and right side walls of the installation cavity 143 form the left flow channel 141 and the right flow channel 142 respectively, the air fryer achieves better guidance of the hot airflow thrown off by the centrifugal fan 15, this enables the hot airflow to turn and enter the cooking chamber 11 more effectively, thereby heating the food within the cooking chamber 11 and improving cooking efficiency. Additionally, the flared structure of the installation cavity 143 side walls allows the hot airflow within the installation cavity 143 to be more uniformly diffused into the cooking chamber 11, thereby heating the food and enhancing the cooking effect.

As shown in FIG. 4, in an optional embodiment, the centrifugal fan 15 has a rotation direction with a first tangent 151, the first tangent 151 passes through the junction of the upper left flow channel 1411 and the lower left flow channel 1412 and intersects with the left edge of the wind-guide plate 12. In the air fryer, the airflow generated by the rotation of the centrifugal fan 15 is spiral, meaning the wind is thrown off along the tangent direction of the fan blades, the flow channel 14 extends to both sides, under the guidance of the flow channel 14, most of the airflow exiting the flow channel 14 is horizontally flowing air, with a small portion being vertically flowing air. By setting the first tangent 151 of the centrifugal fan's rotation direction to pass through the junction of the upper left flow channel 1411 and the lower left flow channel 1412 and intersect with the left edge of the wind-guide plate 12, the air on one side of the first tangent 151 is primarily horizontally flowing air, while the air on the other side is primarily vertically flowing air. By utilizing the wider of the upper left flow channel 1411 and the lower left flow channel 1412 to guide the horizontally flowing air thrown off by the centrifugal fan 15, and the narrower one to guide the vertically flowing air, more of the horizontally flowing air can be directed into the cooking chamber 11 to promote the horizontal circulation of the circulating hot air flow. At the same time, the vertically flowing air expelled into the cooking chamber 11 is reduced, thereby minimizing turbulence and effectively improving the cooking efficiency of the air fryer.

As shown in FIG. 4, the centrifugal fan 15 also has a second tangent 152 on its rotation direction, the second tangent 152 passes through the junction of the upper right flow channel 1421 and the lower right flow channel 1422 and intersects with the right edge of the wind-guide plate 12, since the airflow generated by the rotation of the centrifugal fan 15 is spiral, the wind is thrown off along the tangent direction of the fan blades. By setting the second tangent 152 of the centrifugal fan's rotation direction to pass through the junction of the upper right flow channel 1421 and the lower right flow channel 1422 and intersect with the right edge of the wind-guide plate 12, the air on one side of the second tangent 152 is primarily horizontally flowing air, while the air on the other side is primarily vertically flowing air. By utilizing the wider of the upper right flow channel 1421 and the lower right flow channel 1422 to guide the horizontally flowing air thrown off by the centrifugal fan 15, and the narrower one to guide the vertically flowing air, more of the horizontally flowing air can be directed into the cooking chamber 11 to promote the horizontal circulation of the circulating hot air flow. At the same time, the vertically flowing air expelled into the cooking chamber 11 is reduced, thereby minimizing turbulence and effectively improving the cooking efficiency of the air fryer.

As shown in FIG. 6, in an optional embodiment, the horizontal cross-section of the left flow channel 141 and the right flow channel 142 is arc-shaped, extending from the bottom of the installation cavity 143 towards the opening of the installation cavity 143, the air fryer achieves effective reduction of the resistance encountered by the hot airflow flowing within the flow channel 141 and 142, this also enables better guidance of the hot airflow thrown off by the centrifugal fan 15, allowing it to turn and enter the cooking chamber 11 more effectively to heat the food. Consequently, the heat circulation efficiency and cooking efficiency within the air fryer are improved.

As shown in FIG. 5, in an optional embodiment, the vertical cross-sectional shape of the installation cavity 143 side wall is identical to that of the flow-guide plate 13, and at least a portion of the cross-sectional dimensions of the installation cavity 143 side wall is larger than that of the flow-guide plate 13. By configuring the shape of the flow-guide plate 13 to match the vertical cross-sectional shape of the installation cavity 143 side wall, the flow-guide plate 13 can better cooperate with the wind-guide plate 12, thereby enhancing the overall aesthetics of the air fryer, this also reduces the mutual interference between the central suction and the surrounding exhaust airflow of the flow-guide plate 13, thereby improving the heat circulation efficiency within the air fryer. Additionally, by ensuring that at least a portion of the vertical cross-sectional dimensions of the installation cavity 143 side wall is larger than that of the flow-guide plate 13, the outlet size of the flow channel 14 can be guaranteed, preventing the flow-guide plate 13 from obstructing the flow channel outlet and ensuring the smooth expulsion of the hot airflow within the flow channel 14. This, in turn, ensures the heat circulation efficiency and cooking efficiency of the air fryer.

As shown in FIG. 3 and FIG. 6, in an optional embodiment, the flow-guide plate 13 is positioned on the same vertical plane as the opening of the installation cavity 143 or in front of the vertical plane of the installation cavity opening. By positioning the flow-guide plate 13 at the opening of the installation cavity 143 or in front of the opening plane of the installation cavity 143, the centrifugal fan 15 can more orderly draw in the hot air from the cooking chamber 11 through the suction port 131 at the center of the flow-guide plate 13, this ensures that the intake and exhaust processes do not interfere with each other, effectively reducing the occurrence of turbulence and enhancing the heat circulation efficiency and cooking efficiency of the air fryer.

As shown in FIG. 5, in an optional embodiment, the centrifugal fan 15 is located within the projection area of the flow-guide plate 13 on the bottom of the installation cavity 143, and the suction port 131 corresponds to the inlet at the center of the centrifugal fan 15. By positioning the centrifugal fan 15 within the projection area of the flow-guide plate 13 on the bottom of the installation cavity 143, the centrifugal fan 15 can be hidden, thereby improving the overall aesthetics of the air fryer, this also reduces the mutual interference between the central suction and the surrounding exhaust airflow of the flow-guide plate 13, thereby enhancing the suction and exhaust efficiency, and consequently improving the heat circulation efficiency and cooking efficiency of the air fryer. Additionally, by aligning the suction port 131 with the inlet at the center of the centrifugal fan 15, the suction efficiency is effectively improved, further boosting the heat circulation efficiency and cooking efficiency of the air fryer.

### Embodiment 2:

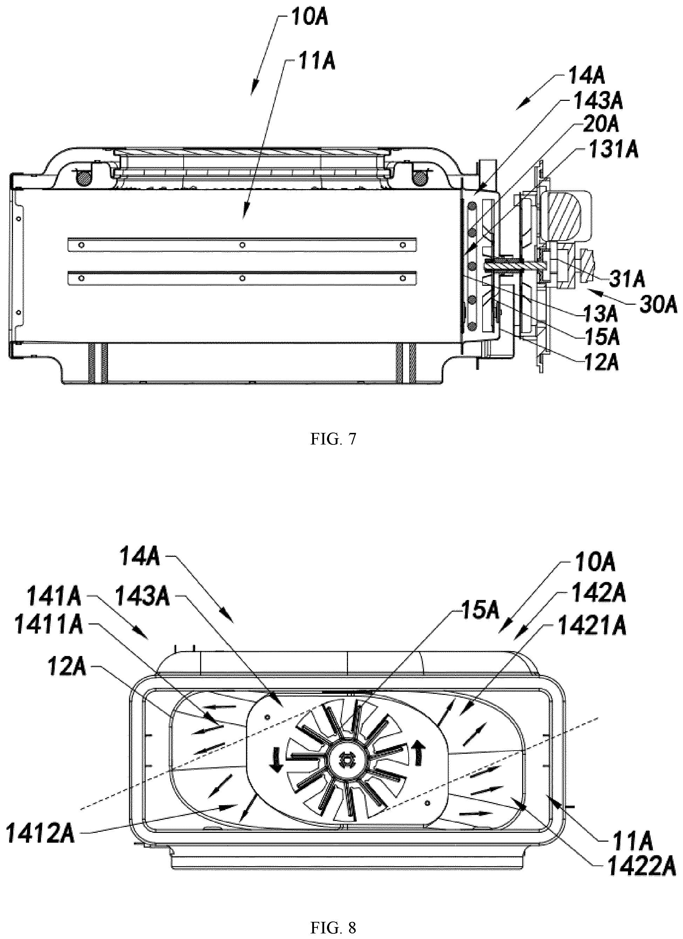

As shown in FIG. 7 to FIG. 8, the second embodiment of the air fryer provided in this disclosure is similar in part to the first embodiment, and the details are not repeated here, the differences between the second embodiment and the first embodiment lie in the position of the heating assembly, the rotation direction of the drive motor, and the structure of the flow channel.

As shown in FIG. 7, the air fryer comprises a body 10A and a cooking chamber 11A disposed within the body 10A, the cooking chamber 11A is provided with a basket that is removably connected and communicates with the cooking chamber 11A, the basket is adapted to hold food to be cooked, at the rear of the cooking chamber 11A, there is a wind-guide plate 12A, in front of the wind-guide plate 12A, a flow-guide plate 13A is disposed, between the flow-guide plate 13A and the wind-guide plate 12A, a flow channel 14A is formed, which extends to both sides of the cooking chamber 11A and connects with it, within the flow channel 14A, a centrifugal fan 15A and a heating assembly 20A are arranged, the heating assembly 20A is disposed in front of the centrifugal fan 15A, and at least a portion of the heating assembly 20A corresponds to the suction port 131A of the flow-guide plate 13A. By positioning the heating assembly 20A in front of the centrifugal fan 15A and at least partially aligning it with the suction port 131A, the air entering the flow channel 14A through the suction port 131A can be directly heated, thereby improving heating efficiency. Additionally, the circulating hot air flow entering the flow channel 14A through the suction port 131A can be reheated, compensating for heat loss during the circulation process and further enhancing cooking efficiency.

As shown in FIG. 8, in the air fryer of the second embodiment, the drive system 30A includes a drive motor 31A with variable rotation direction, the drive motor 31A is connected to the centrifugal fan 15A to drive its counterclockwise rotation, the width of the upper left flow channel 1411A is set to be larger than that of the lower left flow channel 1412A, the width of the upper right flow channel 1421A is set to be smaller than that of the lower right flow channel 1422A, the width of the left flow channel 141A gradually increases from top to bottom, then remains constant to form the upper left flow channel 1411A, and finally gradually decreases to form the lower left flow channel 1412A. Meanwhile, the width of the right flow channel 142A gradually increases from bottom to top, then remains constant to form the lower right flow channel 1422A, and finally gradually decreases to form the upper right flow channel 1421A. In the air fryer, since the airflow generated by the rotation of the centrifugal fan 15A is spiral, when the centrifugal fan 15A rotates counterclockwise, the upper left flow channel 1411A becomes a high-pressure zone, the lower left flow channel 1412A becomes a low-pressure zone, the upper right flow channel 1421A becomes a low-pressure zone, and the lower right flow channel 1422A becomes a high-pressure zone. By setting the width of the upper left flow channel 1411A to be larger than that of the lower left flow channel 1412A and the width of the upper right flow channel 1421A to be smaller than that of the lower right flow channel 1422A, more horizontally flowing air is expelled through the upper left flow channel 1411A and the lower right flow channel 1422A to promote the horizontal circulation of the circulating hot air flow. Meanwhile, the vertical airflow expelled through the lower left flow channel 1412A and the upper right flow channel 1421A is minimized to reduce turbulence within the cooking chamber 11A, thereby enhancing the heat circulation efficiency and cooking efficiency within the cooking chamber 11A.

### Embodiment 3:

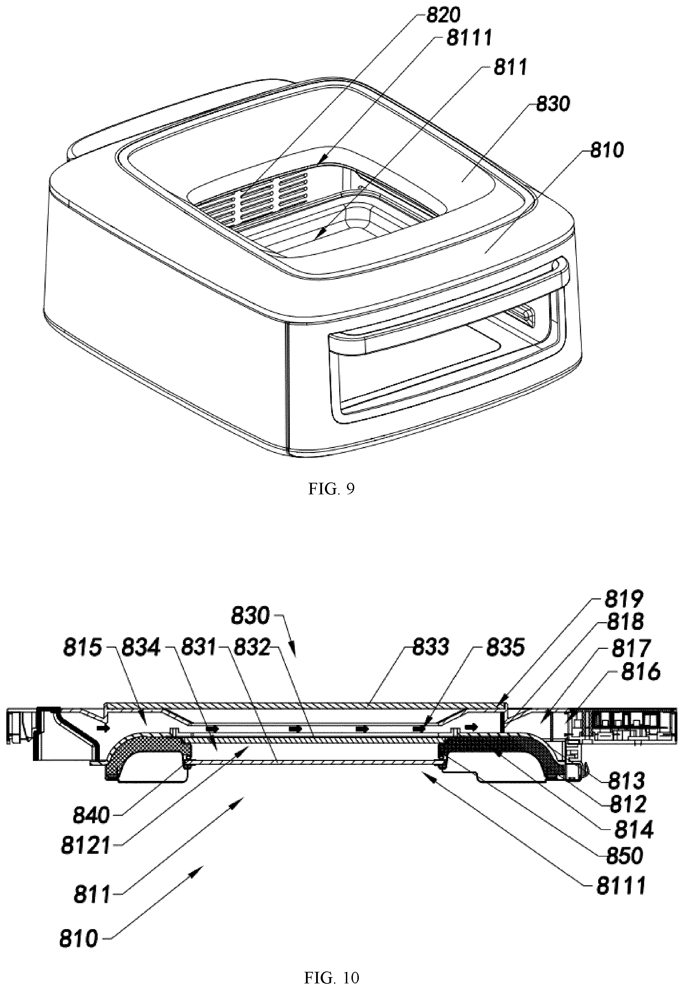

As shown in FIG. 9 to FIG. 11, the third embodiment of the air fryer provided in this disclosure comprises a body 810, a cooking chamber 811 disposed within the body 810, and a hot-air circulation system 820 connected to the cooking chamber 811, the hot-air circulation system 820 is adapted to generate circulating hot air flow and introduce it into the cooking chamber 811 to cook the food within the cooking chamber 811.

As shown in FIG. 9, the top of the cooking chamber 811 is provided with a top opening 8111, which is sealed by a viewport assembly 830, the viewport assembly 830 is at least partially made of transparent materials such as glass or plastic. By incorporating a top opening 8111 in the cooking chamber 811 and sealing it with a viewport assembly 830 made of transparent materials, the interior of the cooking chamber 811 becomes visible, this allows users to intuitively observe the cooking status of the food, thereby improving the user's cooking experience and enabling better food cooking, which in turn enhances the cooking effect.

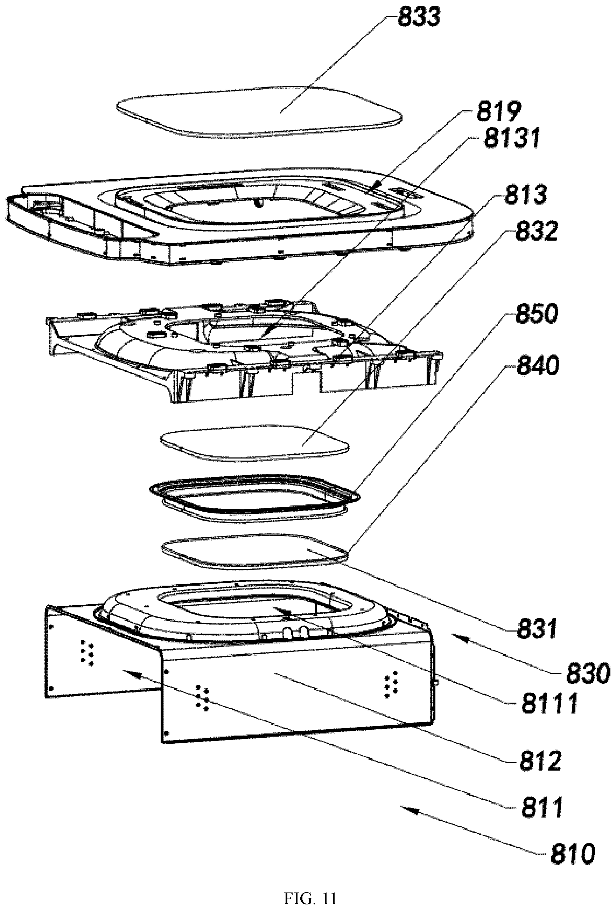

As shown in FIG. 10 and FIG. 11, the viewport assembly 830 comprise a first perspective plate 831 disposed on the top of the cooking chamber 811 to seal the top opening 8111, a third perspective plate 833 disposed on the upper surface of the body 810, and a second perspective plate 832 disposed between the first perspective plate 831 and the third perspective plate 833, the first perspective plate 831 and the second perspective plate 832 form a first heat-insulation cavity 834 between them, while the second perspective plate 832 and the third perspective plate 833 form a second heat-insulation cavity 835 between them. By configuring the viewport assembly 830 with a three-layer perspective plate structure and forming heat-insulation cavities between adjacent perspective plates, effective heat insulation is achieved, this reduces the risk of users being scalded by the high temperature within the cooking chamber 811, thereby enhancing the safety of the air fryer.

As shown in FIG. 10 and FIG. 11, the top of the cooking chamber 811 is provided with a air-guide plate 812, which has the top opening 8111, above the air-guide plate 812 is an upper machine core 813, which has a through-hole 8131 corresponding to the top opening 8111, the second perspective plate 832 is disposed on the upper machine core 813 and seals the through-hole 8131, an annular partition 850 is provided between the top opening 8111 and the through-hole 8131, the first perspective plate 831 and the second perspective plate 832 are sandwiched between the air-guide plate 812, the upper machine core 813, and the annular partition 850, the annular partition 850 not only facilitates the installation and fixation of the first perspective plate 831 and the second perspective plate 832 but also separates them to form the first heat-insulation cavity 834, this effectively insulates the high temperature within the cooking chamber 811, reducing the risk of users being scalded by the escaping heat, thereby enhancing the safety of the air fryer.

As shown in FIG. 10 and FIG. 11, in an optional embodiment, the periphery of the first perspective plate 831 is fitted with a sealing sleeve 840 made of elastic high-temperature-resistant material, the first perspective plate 831 is adapted to be sealed against the annular partition 850 and the air-guide plate 812 via the sealing sleeve 840, the sealing sleeve 840 serves to ensure a tight seal between the first perspective plate 831, the annular partition 850, and the air-guide plate 812, this effectively prevents the high-temperature hot air within the cooking chamber 811 from leaking out and damaging external electrical components. It also reduces the risk of the body and/or the viewport assembly becoming excessively hot and causing scald injuries to users, thereby enhancing the performance stability and safety of the air fryer.

As shown in FIG. 10, a third heat-insulation cavity 814 is formed between the air-guide plate 812, the upper machine core 813, and the annular partition 850, and the third heat-insulation cavity 814 contains an insulating layer made of materials such as heat-resistant cotton or aerogel felt. By incorporating the third heat-insulation cavity 814 and filling it with a heat-resistant insulating material between the air-guide plate 812, the upper machine core 813, and the annular partition 850, effective heat insulation is provided around the viewport assembly 830, this reduces the risk of the body surface near the viewport assembly becoming excessively hot and causing scald injuries to users, thereby improving the safety of the air fryer.

As shown in FIG. 10, the body 810 houses a heat-dissipation flow channel 815 connected to the atmosphere, the heat-dissipation flow channel 815 contains a heat-dissipation component for generating a cooling airflow, the heat-dissipation flow channel 815 is arranged to surround at least a portion of the third heat-insulation cavity 814. By incorporating a heat-dissipation flow channel 815 within the body 810 and arranging it to surround part of the third heat-insulation cavity 814, the cooling airflow within the heat-dissipation flow channel 815 can dissipate heat from the third heat-insulation cavity 814, this reduces the risk of the body surface becoming excessively hot due to the high temperature within the cooking chamber passing through the third heat-insulation cavity, thereby minimizing the risk of scalding users and enhancing the safety of the air fryer.

As shown in FIG. 10, in an optional embodiment, the heat-dissipation flow channel 815 is connected to the second heat-insulation cavity 835. By connecting the heat-dissipation flow channel 815 to the second heat-insulation cavity 835, the cooling airflow within the heat-dissipation flow channel 815 can dissipate heat from the second heat-insulation cavity 835. This reduces the risk of the viewport assembly surface becoming excessively hot due to the transfer of high temperature from the cooking chamber through the second heat-insulation cavity 835, thereby minimizing the risk of scalding users and enhancing the safety of the air fryer.

As shown in FIG. 10, in an optional embodiment, outside the second heat-insulation cavity 835 is an installation cavity 816 housing electrical components such as a drive system and control circuit, a heat-insulation board 817 separates the second heat-insulation cavity 835 from the installation cavity 816, a fourth heat-insulation cavity 818 is formed between the heat-insulation board 817 and the outer wall of the installation cavity 816. By incorporating the fourth heat-insulation cavity 818 between the second heat-insulation cavity 835 and the installation cavity 816, the transfer of high temperature from the cooking chamber to the installation cavity 816 is reduced. This lowers the risk of damage to the electrical components within the installation cavity 816. It also prevents the cooling airflow within the second heat-insulation cavity 835, which may carry residual heat, from entering the installation cavity 816 and causing overheating that could affect the normal operation of the electrical components. Consequently, the performance stability and safety of the air fryer are enhanced.

In an optional embodiment, the heat-insulation board 817 is made of heat-insulating material, and the first perspective plate 831 is made of high-temperature-resistant transparent material such as heat-resistant glass or heat-resistant plastic, the use of heat-insulating material for the heat-insulation board 817 further enhances the insulating effect of the fourth heat-insulation cavity 818, effectively reducing the impact of heat transfer from the cooking chamber on the electrical components within the installation cavity 816 and ensuring their normal operation. Meanwhile, the first perspective plate 831, made of high-temperature-resistant transparent material, avoids performance degradation caused by the high temperature within the cooking chamber, ensuring the stability and reliability of the first perspective plate 831's performance and structure.

As shown in FIG. 10, in an optional embodiment, the top of the body 810 is provided with an installation groove 819 surrounding the top opening 8111, the third perspective plate 833 is disposed within the installation groove 819, with its top surface flush with the top surface of the installation groove 819. By positioning the third perspective plate 833 within the installation groove 819 and aligning its top surface with that of the installation groove 819, the third perspective plate 833 is hidden, thereby enhancing the overall aesthetics of the air fryer. It should be noted that the terms used here are only intended to describe specific implementations and are not intended to limit exemplary implementations according to the present disclosure. As used herein, unless otherwise explicitly stated in the context, the singular form is also intended to include the plural form. Additionally, it should further be understood that, when the terms "comprising" and/or "including" are used in this specification, they indicate the presence of features, steps, operations, devices, assemblies and/or combinations thereof.

Unless otherwise specified specifically, the relative arrangement, numerical expressions and values of components and steps described in these embodiments do not limit the scope of the present disclosure. At the same time, it should be understood that for ease of description, the dimensions of the various parts shown in the accompanying drawings are not drawn according to an actual proportional relation. For techniques, methods, and devices known to those of ordinary skill in the related art, detailed discussions may not be made, but in appropriate circumstances, such techniques, methods, and devices should be considered as part of the granted specification. **In** all the examples shown and discussed here, any specific value should be interpreted as merely illustrative and not restrictive. Therefore, other examples of exemplary embodiments may have different values. It should be noted that: similar numerals and letters represent similar items in the following accompanying drawings. Therefore, once an item is defined in one accompanying drawing, it does not need to be further discussed in subsequent accompanying drawings.

In the description of this disclosure, it should be understood that the positional terms such as "front, rear, upper, lower, left, right," "horizontal, vertical, transverse, longitudinal," and "top, bottom" are typically based on the orientation or positional relationships shown in the drawings. These terms are used for descriptive convenience and simplification. Unless otherwise specified, these terms do not imply that the device or component must have a specific orientation or be constructed and operated in a specific orientation, and thus should not be construed as limiting the scope of this disclosure. The terms "inner, outer" refer to the interior and exterior relative to the contours of the respective components.

For descriptive convenience, spatial relative terms such as "over," "above," "upper," "on," "upper-side," "beneath," "below," "lower," "on the top of," "on/over the top of," "on top of," "lower-side," "under," "beneath," "below," "underneath," etc., may be employed herein to describe the spatial relationships between one device or feature and another as illustrated in the Figures. It should be understood that these spatial relative terms are intended to encompass different orientations of the device in use or operation in addition to the orientation depicted in the Figures. For example, if the device in the Figures is inverted, the device described as being "over" or "above" other devices or structures will then be positioned "under" or "below" other devices or structures. The device may also be oriented in other ways (e.g., rotated 90 degrees or at other orientations), and the spatial relative terms should be interpreted accordingly. Furthermore, it should be noted that the use of terms such as "first" and "second" to describe components is solely for the purpose of distinguishing between them. Unless otherwise stated, these terms do not carry any special significance and should not be interpreted as limiting the scope of this disclosure.

The above provides a detailed introduction to the air fryer with high cooking efficiency provided in the present disclosure, specific examples are applied herein to explain the principles and implementations of the present disclosure, the illustration of the above embodiments is only used to help understanding a method and its core idea of the present disclosure. Meanwhile, for those of ordinary skill in the art, there may be changes in the specific implementations and application scope based on the ideas of the present disclosure. In summary, the content of this specification should not be understood as limiting the present disclosure.

### Industrial Applicability

In the present application, By incorporating a flow channel extending to both sides at the rear of the cooking chamber and housing a centrifugal fan within the flow channel, the hot air within the cooking chamber, heated by the heating assembly, is drawn into the flow channel through the suction port at the center of the flow-guide plate and expelled from the sides of the flow-guide plate, this creates a horizontally circulating hot air flow within the cooking chamber, enabling more uniform heating of the upper and lower surfaces of the food and improving the cooking outcome. Additionally, since the airflow generated by the rotation of the centrifugal fan is spiral, the left flow channel is designed with an unequal upper and lower width structure. Specifically, the width of the upper left flow channel is set to be smaller than or larger than that of the lower left flow channel based on the operating conditions of the centrifugal fan. This design allows more horizontally flowing air to be expelled through the left flow channel to promote horizontal circulation of the circulating hot air flow, while reducing the vertical airflow expelled through the left flow channel to minimize turbulence within the cooking chamber. Consequently, the exhaust efficiency and heat circulation efficiency are improved. Furthermore, as the airflow exiting the left flow channel and the right flow channel is symmetric about the central axis of the centrifugal fan, the right flow channel is also designed with an unequal upper and lower width structure symmetric to the left flow channel. This further enhances the exhaust efficiency and heat circulation efficiency, thereby elevating the cooking efficiency and cooking performance of the air fryer.

## Claims

1. An air fryer with high cooking efficiency, comprising a body and a cooking chamber disposed within the body, wherein the cooking chamber has a wind-guide plate at its rear, a flow-guide plate is disposed in front of the wind-guide plate, a flow channel is formed between the flow-guide plate and the wind-guide plate, a centrifugal fan is arranged within the flow channel, the flow channel comprises a left flow channel and a right flow channel that extend to both sides and connect with the cooking chamber, the left flow channel and the right flow channel are symmetric about the central axis, the left flow channel comprises an upper left flow channel and a lower left flow channel located below the upper left flow channel, the width of the upper left flow channel is smaller than or larger than that of the lower left flow channel, the flow-guide plate is provided with a suction port at its center, the suction port corresponds to the centrifugal fan, and a heating assembly is disposed within the cooking chamber and/or the flow channel.

2. The air fryer with high cooking efficiency according to claim 1, wherein the flow channel further comprises an installation cavity formed by the inward recess of the wind-guide plate away from the flow-guide plate, the bottom of the installation cavity is a planar structure, and the centrifugal fan is disposed within the installation cavity, the left flow channel and the right flow channel are in communication with the installation cavity.

3. The air fryer with high cooking efficiency according to claim 2, wherein the side walls of the installation cavity are configured as a flared structure extending from the bottom of the installation cavity towards the opening of the installation cavity, the left and right side walls of the installation cavity form the left flow channel and the right flow channel respectively.

4. The air fryer with high cooking efficiency according to claim 3, wherein the centrifugal fan rotates in a counterclockwise direction, the width of the upper left flow channel is greater than that of the lower left flow channel, the width of the left flow channel gradually increases from top to bottom, then remains constant to form the upper left flow channel, and finally gradually decreases to form the lower left flow channel; or
The centrifugal fan rotates in a clockwise direction, the width of the upper left flow channel is smaller than that of the lower left flow channel, the width of the left flow channel gradually increases from bottom to top, then remains constant to form the lower left flow channel, and finally gradually decreases to form the upper left flow channel.

5. The air fryer with high cooking efficiency according to claim 4, wherein the centrifugal fan has a rotation direction with a first tangent, the first tangent passes through the junction of the upper left flow channel and the lower left flow channel and intersects with the left edge of the wind-guide plate.

6. The air fryer with high cooking efficiency according to claim 3, wherein the horizontal cross-section of the left flow channel and the right flow channel is arc-shaped, extending from the bottom of the installation cavity towards the opening of the installation cavity.

7. The air fryer with high cooking efficiency according to claim 3, wherein the vertical cross-sectional shape of the installation cavity side wall is identical to that of the flow-guide plate, and at least a portion of the cross-sectional dimensions of the installation cavity side wall is larger than that of the flow-guide plate.

8. The air fryer with high cooking efficiency according to claim 7, wherein the flow-guide plate is positioned on the same vertical plane as the opening of the installation cavity or in front of the vertical plane of the installation cavity opening.

9. The air fryer with high cooking efficiency according to claim 2, wherein the centrifugal fan is located within the projection area of the flow-guide plate on the bottom of the installation cavity, and the suction port corresponds to the inlet at the center of the centrifugal fan.

10. The air fryer with high cooking efficiency according to any one of claims 1 to 9, wherein the cooking chamber has a top opening at its top, which is sealed by a viewport assembly, the viewport assembly comprises a first perspective plate disposed on the top of the cooking chamber to seal the top opening, a third perspective plate disposed on the upper surface of the body, and a second perspective plate disposed between the first perspective plate and the third perspective plate, the first perspective plate and the second perspective plate form a first heat-insulation cavity between them, and the second perspective plate and the third perspective plate form a second heat-insulation cavity between them.

11. The air fryer with high cooking efficiency according to claim 10, wherein the top of the cooking chamber is provided with an air-guide plate, which has the top opening, above the air-guide plate is an upper machine core, which has a through-hole corresponding to the top opening, the second perspective plate is disposed on the upper machine core and seals the through-hole, an annular partition is provided between the top opening and the through-hole, the first perspective plate and the second perspective plate are respectively sandwiched between the air-guide plate, the upper machine core, and the annular partition.

12. The air fryer with high cooking efficiency according to claim 11, wherein the periphery of the first perspective plate is fitted with a sealing sleeve, the first perspective plate is adapted to be sealed against the annular partition and the air-guide plate via the sealing sleeve.

13. The air fryer with high cooking efficiency according to claim 11, wherein a third heat-insulation cavity is formed between the air-guide plate, the upper machine core, and the annular partition, and the third heat-insulation cavity contains an insulating layer, the body houses a heat-dissipation flow channel connected to the atmosphere, the heat-dissipation flow channel contains a heat-dissipation component for generating a cooling airflow, the heat-dissipation flow channel is arranged to surround at least a portion of the third heat-insulation cavity.

14. The air fryer with high cooking efficiency according to claim 10, wherein the body houses a heat-dissipation flow channel connected to the atmosphere, the heat-dissipation flow channel contains a heat-dissipation component for generating a cooling airflow, the heat-dissipation flow channel is connected to the second heat-insulation cavity, outside the second heat-insulation cavity is an installation cavity housing electrical components, a heat-insulation board separates the second heat-insulation cavity from the installation cavity, a fourth heat-insulation cavity is formed between the heat-insulation board and the outer wall of the installation cavity.

15. The air fryer with high cooking efficiency according to claim 10, wherein the top of the body is provided with an installation groove surrounding the top opening, the third perspective plate is disposed within the installation groove, with its top surface flush with the top surface of the installation groove.
